# EUROPEAN PATENT APPLICATION

(11) **EP 2 330 672 A1**
(43) Date of publication of application: **08.06.2011**
(21) Application number: 10191896.9
(22) Date of filing: 19.11.2010
(51) Int. Cl.: H01M 8/12, H01M 8/02, C03C 14/00, C04B 35/18, C04B 35/80

(54) **Glass seal containing zirconia powder and fiber for a solid oxide fuel cell stack**

(30) Priority: 03.12.2009 US 630198
(71) Applicant: Delphi Technologies, Inc., Troy, MI 48007 (US)
(72) Inventor: Mukerjee, Subhasish, Pittsford, NY 14534 (US); Haltiner Jr., Karl Jacob, Fairport, NY 14450 (US); Sprenkle, Vincent L., Richland, WA 99352 (US); Meinhardt, Kerry D., Richland, WA 99352 (US)
(74) Representative: Denton, Michael John

(57) **Abstract**

A glass ceramic composition for sealing adjacent metal cassettes in an SOFC stack. The seal composition comprises an alumina-silicate glass ceramic matrix or a matrix of Zr2 and a ceramic fiber aggregate and non-fibrous zirconia dispersed in the matrix. Preferably, the fiber is selected from the group consisting of zirconium oxide fiber, alumina fiber, and combinations thereof. Preferably, the fiber is present at 1-60 weight percent with respect to the weight of glass ceramic, preferably about 30 weight percent. Preferably, the zirconia fiber is stabilized by up to about 10% yttria. Alumina fiber may substitute for a portion of the zirconia fiber. Preferably, the non-fibrous zirconia is present at about 5 weight percent and is also stabilized.

## Description

### TECHNICAL FIELD

The present invention relates to solid oxide fuel cell (SOFC) stacks; more particularly, to seals for connecting adjacent fuel cell cassettes in an SOFC stack; and most particularly, to an improved glass seal incorporating ceramic fiber and an additional non-fibrous zirconia containing material to increase resistance to cracking during thermal cycling of the stack in use.

### BACKGROUND OF THE INVENTION

In practical fuel cell systems, the output of a single fuel cell is typically less than one volt, so connecting multiple cells in series is required to achieve useful operating voltages. Typically, a plurality of fuel cells are mechanically stacked up in a "stack" and are electrically connected in series from the anode of one cell to the cathode of an adjacent cell via intermediate stack elements known in the art as interconnects.

A solid oxide fuel cell (SOFC) comprises a cathode layer, an electrolyte layer formed of a solid oxide and bonded to the cathode layer, and an anode layer bonded to the electrolyte layer on a side opposite from the cathode layer. In use of the cell, air is passed over the surface of the cathode layer, and oxygen from the air migrates through the electrolyte layer and reacts in the anode with hydrogen being passed over the anode surface to form water, thereby creating an electrical potential between the anode and the cathode of about 1 volt. Typically, each individual fuel cell is mounted, for handling, protection, and assembly into a stack, within a metal frame to form a cell-frame assembly.

To facilitate formation of a stack of fuel cells wherein the voltage formed is a multiple of the number of fuel cells in the stack, connected in series, a known intermediate process joins together a cell-frame assembly with a metal separator plate and an anode interconnect to form an intermediate structure known in the art as a fuel cell cassette ("cassette"). The thin sheet metal separator plate is stamped and formed to provide, when joined to the mating cell frame and anode spacers, a flow space for the anode gas. Typically, the separator plate is formed of ferritic stainless steel for low cost.

In forming the stack, the cell-frame assembly of each cassette subassembly is sealed to the perimeter of the metal separator plate of the adjacent cassette to form a cathode air flow space and to seal the feed and exhaust passages for air and hydrogen against cross-leaking or leaking to the outside of the stack. This seal should also be electrically insulating since the adjacent cassettes are at different voltage potentials.

SOFCs operate at temperatures of about 500**°**C to about 1000°C, and a known challenge in the art is providing cassette-to-cassette seals that can survive repeated vibration, shock, and thermal cycling between ambient and operating temperatures. Some prior art glass or glass-ceramic seals show porosity and micro-cracks that propagate with increasing numbers of thermal cycles of an SOFC stack in use and eventually cause unacceptable leakage during operation. These glass seals crystallize with thermal cycles, increasing crack propagation properties that lead to seal failure.

It is known to provide glass for SOFC seals wherein the coefficient of thermal expansion (CTE) approximates that of the materials to be bonded. US Patent No. 6,430,966 B1 discloses a tri-metallic glass ceramic of the general formula M_{A}O—M_{B}O_{Y}—SiO₂ wherein M_{A} is selected from the group consisting of barium, strontium, calcium, or a combination thereof, and M_{B}O_{Y} is selected from the group consisting of Al₂O₃, B₂O₃, P₂O₅, GaO, PbO, and combinations thereof and contains over 5% Al₂O₃. Such glasses are disclosed to be useful in bonding ceramic surfaces of ceramic SOFC assemblies. However, they do not provide a similar benefit to the bonding of metals having CTEs significantly different from those of ceramics, as is required in a fuel cell stack formed from metallic cassettes and disclosed in the present invention.

It is also known to formulate glass for SOFC seals which is loaded with platelets of alumina and/or zirconia to provide an aggregate reinforcement of the glass matrix against cracking. See, for example, S.R. Choi and N.P. Bansal, "Mechanical Properties of SOFC Seal Glass Composites," Ceram. Eng. Sci. Proc., 26 (2005).

US Patent No. 7,258,942, issued August 21, 2007, discloses that by adding additional compliant interlayers (glass or metal) to mica-based seals, leak rates at about 800**°**C can be reduced several thousand times compared to mica-based seals alone. A barium calcium aluminum borosilicate glass (e.g., 35 mol% BaO, 15 mol% CaO, 5 mol% Al₂O₃, 10 mol% B₂O₃, and 35 mol% SiO₂), a glass also known as G18, is one of a number of representative materials available commercially (e.g., Viox Corp., Seattle, Wash., USA) that exhibit excellent Coefficient of Thermal Expansion (CTE) matching properties, as detailed, e.g., by Meinhardt et al. in U.S. Pat. Nos. 6,430,966 and 6,532,769.

It is further disclosed in parent US Patent Application Publication No. 2009/0004544, published January 1, 2009, and incorporated herein by reference, to formulate glass for SOFC seals comprising an alumina-silicate glass matrix and a fiber aggregate dispersed in the matrix. In one aspect of the disclosed invention, the fiber aggregate consists of zirconium oxide (zirconia) fibers. Preferably, the fiber is 1-60 weight percent with respect to the weight of glass ceramic, preferably about 30 weight percent. Preferably, the seal is die cut from a green tape sheet formed by extrusion of a slurry comprising water and a latex binder. The green seal is sintered during the final SOFC stack assembly process to form the final stack seal.

It has been observed by the applicants that, when a zirconia fiber aggregate is used in such seals, the area around the zirconia fibers crystallizes at a lower rate than the rest of the glass matrix. This is believed to be due to formation of a glass composition incorporating zirconia in those local regions, similar to a zirconium oxide glass developed by the applicants consisting of 30% mol% BaO, 15 mol% CaO, 5 mol% Al₂O₃, 10 mol% B₂O₃, 5 mol % ZrO₂ and 35 mol% SiO₂, hereinafter referred to as Zr2 glass. Applicants' observations suggest that this effect of lowering the crystallization rate can be enhanced throughout the glass matrix by incorporating additional, non-fibrous zirconia containing materials into a glass matrix composition before sintering.

What is needed in the art is an improved seal material that provides a mechanically robust joint between adjacent metal fuel cell cassettes that will endure vibration, shock, and thermal cycling.

It is a principal object of the present invention to increase the reliability and durability of an SOFC system.

### SUMMARY OF THE INVENTION

The present invention is about a composition for forming a gas seal against adjacent metal components in a solid oxide fuel cell stack, comprising: a matrix formed of an alumina-silicate glass ceramic; a ceramic fiber aggregate dispersed in said matrix; andnon-fibrous zirconium oxide containing material dispersed in said matrix. At least a portion of said ceramic fiber aggregate comprises zirconium oxide, said ceramic fiber aggregate including alumina. The non-fibrous zirconium oxide containing material is formed as a powder containing material is Zr2. At least one of said zirconium oxide fiber aggregate or said non-fibrous zirconium oxide containing material includes yttrium oxide. The at least one of said zirconium oxide fiber aggregate or said non-fibrous zirconium oxide containing material includes dopants selected from the group of manganese oxide, calcium oxide, cerium oxide, and scandium oxide, and combinations thereof. The yttrium oxide is present in an amount between about 0% and about 20% by weight.The ceramic fiber aggregate is present in an amount between about 1% and about 60% by weight with respect to the weight of said alumina-silicate glass ceramic matrix. The individual fibers in said ceramic fiber aggregate have a length/diameter ratio greater than about 2.5. The length is between about 5µm and about 50µm, and wherein said diameter is between about 2µm and about 20µm. The alumina-silicate glass ceramic is a G18 type glass ceramic. The non-fibrous zirconium oxide containing material is present in an amount between about 1 weight percent and about 50 weight percent. The non-fibrous zirconium oxide containing material is present at about 5 weight percent.The non-fibrous zirconium oxide containing material comprises about 30 mol% BaO, about 5mol% Al₂O₃, about 15mol% CaO, about 10mol% B₂O₃, about 35mol% SiO₂ and about 5mol% ZrO₂.

The invention is also related to a composition for forming a gas seal against adjacent metal components in a solid oxide fuel cell stack, comprising:a matrix formed of Zr2 glass ceramic; a ceramic fiber aggregate dispersed in said matrix; and non-fibrous zirconium oxide containing material dispersed in said matrix. The ceramic fiber aggregate includes alumina. The non-fibrous zirconium oxide containing material is formed as a powder. The non-fibrous zirconium containing material is Zr2.The zirconium oxide fiber aggregate or said non-fibrous zirconium oxide containing material includes yttrium oxide. The zirconium oxide fiber aggregate or said non-fibrous zirconium oxide containing material includes dopants selected from the group of manganese, calcium, cerium, and scandium, and combinations thereof. The yttrium oxide is present in an amount between about 0% and about 20% by weight.The ceramic fiber aggregate is present in an amount between about 1% and about 60% by weight with respect to the weight of said Zr2 glass ceramic matrix.The individual fibers in said ceramic fiber aggregate have a length/diameter ratio greater than about 2.5. The length is between about 5µm and about 50µm, and the diameter is between about 2µm and about 20µm. The non-fibrous zirconium oxide containing material is present in an amount between about 1 weight percent and about 50 weight percent. The non-fibrous zirconium oxide containing material is present at about 5 weight percent.The non-fibrous zirconium oxide containing material comprises about 30 mol% BaO, about 5mol% Al₂O₃, about 15mol% CaO, about 10mol% B₂O₃, about 35mol% SiO₂ and about 5mol% ZrO₂.

The invention is further related to a solid oxide fuel cell stack assembly comprising a plurality of cassette subassemblies, wherein adjacent of said cassette subassemblies are mutually sealed against gas leakage by a gas seal formed of a composition including a matrix formed of glass ceramic and a fiber aggregate and non-fibrous zirconium oxide containing material dispersed in said matrix. The fiber is selected from the group consisting of zirconium oxide fiber, alumina fiber, and combinations thereof. The glass ceramic comprises one of a G18 type or Zr2.The surfaces of said cassette subassemblies sealed against gas leakage by said composition are metallic.Said surfaces are coated with alumina before assembly of said gas seal composition thereto.

Briefly described, a glass ceramic seal composition for sealing adjacent metal cassettes in an SOFC stack comprises a glass ceramic matrix, which may be either an alumina-silicate glass matrix or a matrix of Zr2 glass, with additives that would improve the sealing and thermal cycling property of the seal material. The glass ceramic matrix is incorporated with a Zirconia containing non-fibrous second phase, such as for example, Zirconia powder and a ceramic fiber dispersed in the matrix. The non-fibrous zirconia containing materials in the glass formulation are preferably between about 1 % and about 50%. The ceramic fiber may be selected from the group consisting of zirconium oxide fiber, alumina fiber, and combinations thereof. Preferably, the fiber is 1-60 weight percent with respect to the weight of the glass ceramic matrix, preferably about 30 weight percent. While the Zirconia fibers provide multiple chemical and mechanical improvements to the seal, the alumina does not contribute all those benefits. Therefore, the alumina fibers may preferably not be a direct substitution for the Zirconia fibers. Preferably, the seal as formulated is die cut from a green tape sheet formed by extrusion of a slurry comprising water and a latex binder. The green seal is sintered during the final SOFC stack assembly process to form the final stack seal.

### BRIEF DESCRIPTION OF THE DRAWINGS

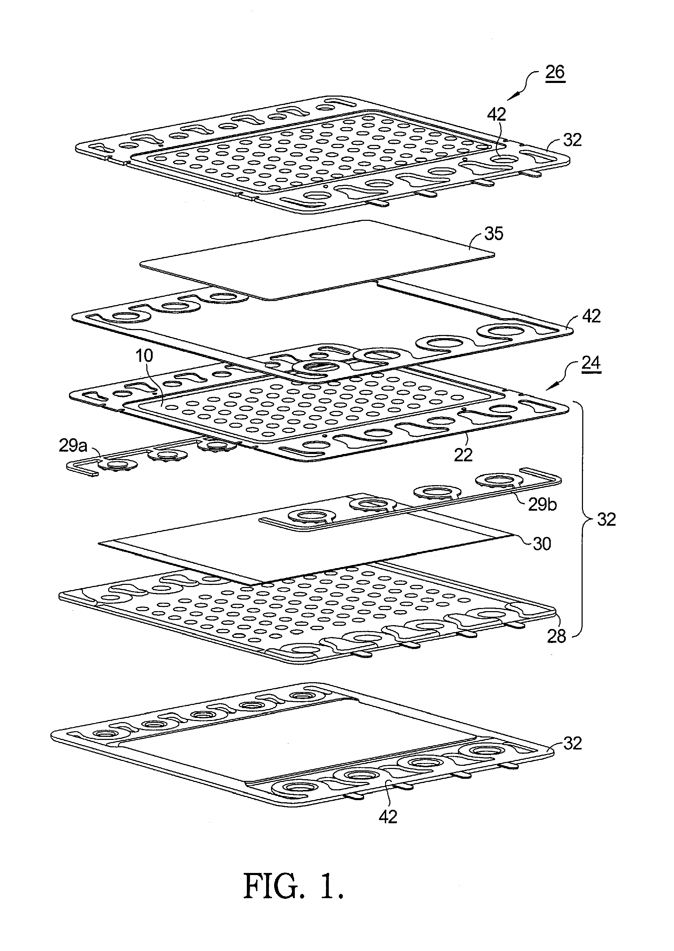

The present invention will now be described, by way of example, with reference to the accompanying drawing, in which FIG. 1 is a exploded isometric view showing three fuel cell cassettes in an SOFC fuel cell stack, wherein the middle exploded cassette incorporates a seal formed of an improved glass ceramic composition in accordance with the present invention.

The exemplification set out herein illustrates one preferred embodiment of the invention, in one form, and such exemplification is not to be construed as limiting the scope of the invention in any manner.

### DESCRIPTION OF THE PREFERRED EMBODIMENTS

Referring to FIG. 1, an SOFC fuel cell 10 comprises a cathode layer, an electrolyte layer formed of a solid oxide and bonded to the cathode layer, and an anode layer bonded to the electrolyte layer on a side opposite from the cathode layer. In a presently preferred embodiment, for handling, protection, and assembly into a stack, fuel cell 10 is mounted within a metal frame 22 to form a cell-frame assembly 24.

To facilitate formation of a stack 26 of fuel cells wherein the voltage formed is a multiple of the number of fuel cells in the stack connected in series, a presently-preferred intermediate process joins together a cell-frame assembly 24 with a separator plate 28, anode spacers 29a, 29b, and an anode interconnect 30 to form an intermediate structure known as a fuel cell cassette subassembly 32 ("cassette"). The thin sheet metal separator plate 28 is stamped and formed to provide a flow space for the anode gas. A cathode interconnect 35, installed during final assembly against the cathode surface and between adjacent cassette subassemblies, provides a cathode air flow space.

During the final stack assembly process, a perimeter seal 42 is inserted between adjacent of the cassettes 32, and the stack is brought to operating temperature and allowed to settle to its final form. At elevated temperature, the separator plate and cell frame deforms, providing a compliant assembly, until the cells and interconnects are resting on one another, under load, which prevents further motion. The glass in the seal composition softens, conforms, and bonds to the metal cassette surfaces.

In accordance with the present invention, perimeter seal 42 is formed of a glass ceramic matrix loaded with one or more types of ceramic fiber and non-fibrous zirconia containing materials. As used herein, the term "fiber" means an acicular material having a length/diameter ratio greater than about 2/1. "Glass ceramic" means an alumino-silicate glass ceramic, as is known in the art, or Zr2 glass as described above.

In one aspect of the invention, the seal material comprises a glass ceramic matrix (either G18 type or Zr2) loaded with polycrystalline zirconia (zirconium oxide) fibers having a length between about 5µm and about 50µm and a diameter between about 2µm and about 20µm (typically between 6µm and 10µm) and having a porosity between about 0% and about 95%. Such zirconia fibers may be stabilized with between about 0% and 20% yttria (Y₂O₃) and are commercially available from Zircar Zirconia, Inc., Florida, NY, USA. While a presently preferred zirconia/yttria fiber is Type ZYBF, other zirconia materials such as, for example, manganese (Mg), calcium (Ca), cerium (CE), or scandium (Sc) doped zirconia can be used. A presently preferred loading of fibers in the glass ceramic matrix, by weight percent, is in the range of about 1 % to about 60% fiber with respect to the weight of glass ceramic, a preferred percentage being about 30%. A presently preferred loading of non-fibrous zirconia containing material (for example, a zirconia based powder) in the glass ceramic matrix, by weight percent, is in the range of about 1 % to about 50% with respect to the weight of the glass ceramic matrix, a preferred percentage being about 5% addition to the glass ceramic-fiber matrix. The non-fibrous zirconia material may also be stabilized with between about 0% and 20% yttria (Y₂O₃). While a presently preferred zirconia/yttria fiber is Type ZYBF, other zirconia materials such as, for example, manganese (Mg), calcium (Ca), cerium (CE), or scandium (Sc) doped zirconia can be used. The invention also contemplates that the fiber loading in the glass matrix may be entirely replaced by the non-fibrous zirconia containing material.

Thus, in one aspect of the invention, a preferred seal material in accordance with the present invention comprises a G18-type glass ceramic matrix composition containing about 35 mol% BaO, about 5mol% Al₂O₃, about 15mol% CaO, about 10mol% B₂O₃, and about 35mol% SiO₂ or a Zr2 glass ceramic matrix composition containing about 30 mol% BaO, about 5mol% Al₂O₃, about 15mol % CaO, about 10mo1% B₂O₃, about 35mol% SiO₂ and about 5mol% ZrO₂; and 5 wt% stabilized non-fibrous zirconia material and 30 wt% stabilized zirconia ceramic fibers. The seal is used between two metallic parts that preferably have been coated with alumina for adherence to the substrate material.

The seal is cost-effective and easy to process (prefabricated tape-casted layer, screen print, dispense, etc).

Referring still to FIG. 1, seal 42 may be formed by any convenient process, for example, by screen printing, extruding from a die, slip casting, injection molding, dispensing or tape casting a slurry (also known as a "slip") of finely-divided glass ceramic/fiber/zirconia mixture. The slurry may be formed, for example, with a water base and/or an acrylic latex binder. Other volatile binders may also be incorporated, within the scope of the invention.

In a presently preferred process, glass ceramic seal 42 is tape-cast from a slip by a doctor blade applicator onto a suitable carrier film to form a "green" (non-cured) tape sheet having a thickness between about 4µm and about 400µm. A green seal is die-cut from the green sheet and inserted into the SOFC stack during assembly thereof. Preferably, the metal surfaces to be sealed have been alumina coated to enhance seal adhesion. During subsequent high-temperature sintering of the assembled stack, as is known in the art, the water and binders in the seal are driven off and the glass matrix is softened and compressed to conform and adhere to the adjacent metal cassette surfaces, thereby forming a substantially hermetic, robust seal.

## Claims

1. A composition for forming a gas seal (42) against adjacent metal components in a solid oxide fuel cell stack (10), characterized it that the composition comprises:
a matrix formed of a glass ceramic:
a ceramic fiber aggregate dispersed in said matrix; and
non-fibrous zirconium oxide containing material dispersed in said matrix.

2. A composition in accordance with claim 1 wherein at least a portion of said ceramic fiber aggregate comprises zirconium oxide.

3. A composition as set in any of the preceding claims wherein said ceramic fiber aggregate includes alumina.

4. A composition as set in any of the preceding claims wherein said non-fibrous zirconium oxide containing material is formed as a powder.

5. A composition as set in any of the preceding claim wherein said non-fibrous zirconium containing material is Zr2.

6. A composition in accordance with Claim 2 wherein at least one of said zirconium oxide fiber aggregate or said non-fibrous zirconium oxide containing material includes yttrium oxide.

7. A composition in accordance with Claim 2 wherein at least one of said zirconium oxide fiber aggregate or said non-fibrous zirconium oxide containing material includes dopants selected from the group of manganese oxide, calcium oxide, cerium oxide, and scandium oxide, and combinations thereof.

8. A composition in accordance with Claim 6 wherein said yttrium oxide is present in an amount between 0% and about 20% by weight.

9. A composition as set in any of the preceding claims wherein said ceramic fiber aggregate is present in an amount between about 1% and about 60% by weight with respect to the weight of said glass ceramic matrix.

10. A composition as set in any of the preceding claims wherein individual fibers in said ceramic fiber aggregate have a length between about 5µm and about 50µm and a length/diameter ratio greater than about 2.5.

11. A composition as set in any of the preceding claims wherein the glass ceramic matrix is formed of an alumina-silicate glass ceramic or of Zr2 glass ceramic.

12. A composition in accordance with Claim 11 wherein said alumina-silicate glass ceramic is a G18 type glass ceramic and said non-fibrous zirconium oxide containing material is present at about 5 weight percent.

13. A composition as set in any of the preceding claims wherein said non-fibrous zirconium oxide containing material is present in an amount between about 1 weight percent and about 50 weight percent.

14. A composition as set in any of the preceding claims wherein said non-fibrous zirconium oxide containing material comprises about 30 mol% BaO, about 5mol% Al₂O₃, about 15mol% CaO, about 10mol% B₂O₃, about 35mol% SiO₂ and about 5mol% ZrO₂.

15. A solid oxide fuel cell stack assembly comprising a plurality of cassette subassemblies, wherein adjacent of said cassette subassemblies are mutually sealed against gas leakage by a gas seal as set in any of the preceding claim.
